Europäisches Patentamt

European Patent Office

Office européen des brevets

(19)

(11) Veröffentlichungsnummer: **0 383 105**
**A1**

## (12) EUROPÄISCHE PATENTANMELDUNG

(21) Anmeldenummer: **90101980.2**

(22) Anmeldetag: **01.02.90**

(51) Int. Cl.5: **B01J 20/02, C01F 11/02**

(30) Priorität: **11.02.89 DE 3904110**

(43) Veröffentlichungstag der Anmeldung:
**22.08.90 Patentblatt 90/34**

(84) Benannte Vertragsstaaten:
**DE FR IT SE**

(71) Anmelder: **Drägerwerk Aktiengesellschaft**
**Moislinger Allee 53-55**
**D-2400 Lübeck 1(DE)**

(72) Erfinder: **Van der Smissen, Carl-Ernst, Dr.**
**Am Traveeck 30**
**D-2400 Lübeck(DE)**

(54) **Verfahren zur Herstellung einer Kohlendioxid-Absorptionsmasse.**

(57) Die bisherigen Verfahren zur Herstellung von Calciumhydroxid für Kohlendioxid-Absorptionsmassen gingen von Calciumoxid aus, das mit Wasser umgesetzt wurde. Wegen der Inhomogenität des technischen Calciumoxids war es auf diesem Wege nicht möglich, zu reproduzierbar hohem $CO_2$-Bindungsvermögen des Calciumhydroxids zu kommen. Die erfindungsgemäße Verbesserung des Herstellverfahrens geht dagegen anstelle von Calciumoxid von wasserlöslichen Calciumsalzen aus. Diese werden in wäßriger Lösung mit Alkalihydroxid umgesetzt, wodurch Calciumhydroxid in reproduzierbarer Form ausgefällt wird. Die Fällung wird abgesaugt, granuliert und auf 16 % Wasser getrocknet. Das Produkt hat ein sehr gutes $CO_2$-Bindungsvermögen und kann vorteilhaft in allen Sauerstoffkreislaufgeräten verwendet werden.

EP 0 383 105 A1

## Verfahren zur Herstellung einer Kohlendioxid-Absorptionsmasse

In Sauerstoffkreislaufgeräten für den Atemschutz sowie in Anästhesiegeräten in der Medizin wird das exhalierte Kohlendioxid durch Absorbermassen auf der Basis von Calciumhydroxid dem Atemkreislauf entzogen. Diese Absorbermassen werden in der Regel in der Weise hergestellt, daß Calciumoxid (gebrannter Kalk) mit Wasser gelöscht wird, das hierbei entstandene Calciumhydroxid mit überschüssigem Wasser zu einem hochviskosen Brei verrührt und auf einer geeigneten Anlage granuliert wird. Der granulierte gelöschte Kalk wird dann durch Trocknung auf einen Wassergehalt von etwa 16 % eingestellt. In dieser Form kommt er in den Atemgeräten zur Anwendung (DE-PS 893 752).

Für Anwendungen, bei denen der Atemkalk eine sehr hohe Reaktionsgeschwindigkeit zur Bindung des $CO_2$ bei guter mechanischer Festigkeit der Kalkkörner aufweisen muß, ist das beschriebene Verfahren nicht genügend reproduzierbar. Der Grund hierfür ist der sehr komplizierte chemische Vorgang bei der Reaktion des Calciumoxids mit Wasser. Die Struktur des gebrannten Kalks ist abhängig von der Brenntemperatur. Kalkstein, der bei Temperaturen zwischen 900 °C und 1000 °C gebrannt wird, ergibt ein lockeres, sehr reaktionsfähiges Calciumoxid. Bei höheren Brenntemperaturen, 1100 °C bis 1300 °C, entstehen sehr feste Produkte, die bedeutend weniger reaktionsfähig sind, bis hin zu "totgebranntem" Kalk, der praktisch gar nicht mehr abgelöscht werden kann. Die auf dem Markt erhältlichen Qualitäten von Calciumoxid werden grob eingeteilt in weich gebrannten Kalk (Brenntemperaturen 900 - 1000 °C) und hart gebrannten Kalk (1100 - 1200 °C). Tatsächlich sind alle erhältlichen Kalksorten Mischungen von weich und hart gebrannten Kalken in wechselnden Verhältnissen. Dies bedeutet, daß auch das Löschverhalten des Kalkes sich häufig ändert, indem die Löschzeit unterschiedlich lang ist und die Temperaturen der Löschmassen durch die freigesetzte Reaktionswärme unterschiedlich erhöht werden. Das gebildete Calciumhydroxid ist in seiner Struktur aber stark abhängig von den Parametern der Löschreaktion, indem sich bei einer schnell und bei hohen Temperaturen ablaufenden Reaktion andere Teilchengrößen und Strukturen bilden als bei langsam und bei tieferen Temperaturen ablaufenden Reaktionen. Schließlich wird dann auch die Fähigkeit der jetzigen Absorptionsmasse zur Bindung von $CO_2$ bestimmt von den Bedingungen der Löschreaktion, so daß es kaum möglich ist, Massen sehr hoher Bindungsfähigkeit auf diesem Wege reproduzierbar herzustellen.

Aufgabe der vorliegenden Erfindung ist es, die Unsicherheiten der Löschreaktion zu vermeiden und auf anderem Wege, der besser reproduzierbar gestaltet werden kann, zu hoch reaktivem Calciumhydroxid zu gelangen.

Die Aufgabe wird dadurch gelöst, daß Calciumsalze in wäßriger Lösung mit Alkalihydroxiden umgesetzt werden und das ausgefällte Calciumhydroxid abfiltriert, getrocknet und granuliert wird.

Die Vorteile des erfindungsgemäßen Herstellungsverfahrens ergeben sich daraus, daß das Calcium vor der Ausfällung als Ion in der wäßrigen Lösung vorliegt, und somit bei konstanter Konzentration eine konstante reproduzierbare Gleichverteilung gewährleistet ist. Bei der Fällungsreaktion entsteht keine nennenswerte Reaktionswärme. So kann die Temperatur des Fällbades leicht konstant gehalten werden. Weitere Fällungsparameter wie Rührgeschwindigkeit, Eingießen der Calciumsalzlösung in die Alkalihydroxidlösung bzw. umgekehrt, Überschuß von Salzlösung oder Alkalihydroxidlösung, lassen sich ebenfalls leicht konstant halten. Somit ist es auf dem Wege über die Fällung aus wäßriger Lösung möglich, ein Calciumhydroxid mit reproduzierbaren chemischen und mechanischen Eigenschaften herzustellen.

Das herkömmliche Löschverfahren wird vorzugsweise bei Temperaturen von 70 °C bis 80 °C durchgeführt, das neue Verfahren hingegen schon bei Raumtemperatur. Daraus ergibt sich als weiterer Vorteil eine erhebliche Energieeinsparung.

Das nach dem herkömmlichen Löschverfahren hergestellte Calciumhydroxid weist eine ungleichmäßige Kornverteilung mit Korngrößen bis zu 0,1 mm auf. Es kommen häufig Einschlüsse von Calciumoxid in den Körnern vor.

Das nach dem erfindungsgemäßen Füllungsverfahren hergestellte Calciumhydroxid zeichnet sich dagegen durch eine gleichmäßige Kornverteilung mit Korngrößen weit unter einem Mikrometer aus. Einschlüsse von Calciumoxid sind völlig ausgeschlossen. Bei einer mikroskopischen Untersuchung einer Calciumhydroxidprobe sind die angeführten Strukturunterschiede deutlich zu erkennen.

Prinzipiell läßt sich die Fällungsreaktion zwischen jedem wasserlöslichen Calciumsalz einerseits und jeder starken Base andererseits herbeiführen.

Unter den Gesichtspunkten niedrige Rohstoffpreise, hohe Reaktionsgeschwindigkeit, hohe Reaktionsausbeute und möglichst geringe Toxizität der Chemikalien kommen für den wirtschaftlichen Einsatz aber nur Calciumchlorid und Calciumnitrat sowie Natriumhydroxid und Kaliumhydroxid in Frage. Durch die besten chemischen Eigenschaften zeichnet sich die Reaktion von Calciumnitrat mit Kaliumhydroxid aus.

Das Verhältnis der Konzentrationen von Calciumsalz und Alkalihydroxid in der Lösung sowie die Temperatur der Lösung haben einen entscheidenden Einfluß auf die Kristallstruktur und die Kristallgröße des ausgefällten Calciumhydroxids. Dies beeinflußt wiederum die Adsorptions- und Festigkeitseigenschaften des fertigen Atemkalkgranulats.

Es ist also möglich, die Eigenschaften des Atemkalks gezielt zu beeinflussen, einerseits durch die Temperatur der Lösung bei der Fällung des Calciumhydroxids und andererseits durch Variation der Konzentrationen der Ausgangssubstanzen. So kann die Fällung bei genauem stöchiometrischen Verhältnis, bei Überschuß von Alkalihydroxid oder bei Überschuß von Calciumsalz erfolgen. Weiterhin kann entweder die Calciumsalzlösung in die Alkalihydroxidlösung oder umgekehrt die Alkalihydroxidlösung in die Calciumsalzlösung gegeben werden. Diese unterschiedlichen Verfahrensweisen führen zu unterschiedlichen lokalen Konzentrationsverhältnissen bei der Fällungsreaktion und beeinflussen somit auch die Eigenschaften des gebildeten Calciumhydroxids.

Um das durch die Fällungsreaktion in der wäßrigen Lösung entstandene Calciumhydroxid von Resten der Ausgangssubstanzen zu befreien, wird es abfiltriert und ausgewaschen, bis es einen Alkalihydroxid-und/oder Salz-Gehalt von 6% unterschreitet. Bei Restgehalten über 6% wird die Adsorptionsleistung des Atemkalks negativ beeinflußt.

Das ausgewaschene Calciumhydroxid wird dann so weit getrocknet, daß es in bekannter Weise auf einem Pastengranulator granuliert werden kann. Das granulierte Calciumhydroxid wird auf einen Wassergehalt von 15 bis 20 % eingestellt und kann so als Atemkalk eingesetzt werden.

Das Herstellverfahren wird an folgendem Beispiel erläutert:

500 g Calciumchlorid und 600 g Kaliumhydroxid werden in jeweils 4 Litern Wasser gelöst und die Lösungen auf 20 °C temperiert. Unter mäßigem Rühren wird die Calciumchloridlösung langsam in die Kaliumhydroxidlösung gegeben. Der gebildete Niederschlag wird mit einer Filterpresse abgesaugt und leicht nachgewaschen, bis das Waschwasser nur noch geringe Mengen an Kaliumchlorid enthält. Der Filterkuchen wird auf einem Pastengranulator auf eine Korngröße von 4 - 5 mm granuliert und dann auf einen Wassergehalt von 16 % getrocknet. Das erhaltene Produkt weist ein sehr gutes Bindungsvermögen für $CO_2$ auf und kann auch unter extremen Bedingungen zur Absorption von $CO_2$ in Sauerstoffkreislaufgeräten verwendet werden.

**Ansprüche**

1. Verfahren zur Herstellung einer Kohlendioxid-Absorptionsmasse für Sauerstoffkreislaufgeräte auf der Basis von Calciumhydroxid, dadurch gekennzeichnet, daß Calciumsalze in wäßriger Lösung mit Alkalihydroxiden umgesetzt werden und das ausgefällte Calciumhydroxid abfiltriert, getrocknet und granuliert wird.

2. Verfahren nach Anspruch 1, dadurch gekennzeichnet, daß als wasserlösliches Calciumsalz Calciumchlorid vorgesehen ist.

3. Verfahren nach Anspruch 1, dadurch gekennzeichnet, daß als wasserlösliches Calciumsalz Calciumnitrat vorgesehen ist.

4. Verfahren nach Anspruch 1, dadurch gekennzeichnet, daß als Alkalihydroxid Natriumhydroxid vorgesehen ist.

5. Verfahren nach Anspruch 1, dadurch gekennzeichnet, daß als Alkalihydroxid Kaliumhydroxid vorgesehen ist.

6. Verfahren nach einem der Ansprüche 1 bis 5, dadurch gekennzeichnet, daß das ausgefällte Calciumhydroxid abgesaugt und ausgewaschen wird, bis es einen Alkalihydroxid- und/oder Salz-Gehalt von 6% unterschreitet.

7. Verfahren nach einem der Ansprüche 1 bis 6, dadurch gekennzeichnet, daß die Fällung unter einem Überschuß von Alkalihydroxid erfolgt.

8. Verfahren nach einem der Ansprüche 1 bis 6, dadurch gekennzeichnet, daß die Fällung unter einem Überschuß von Calciumsalz erfolgt.

9. Verfahren nach einem der Ansprüche 1 bis 8, dadurch gekennzeichnet, daß zur Fällung die Calciumsalzlösung in die Alkalihydroxidlösung gegeben wird.

10. Verfahren nach einem der Ansprüche 1 bis 8, dadurch gekennzeichnet, daß zur Fällung die Alkalihydroxidlösung in die Calciumsalzlösung gegeben wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A- 661 080 (NATIONAL RES. DEV.) * Seite 2, Zeile 110 - Seite 3, Zeile 3 * ---- | 1 | B 01 J 20/02 C 01 F 11/02 |
| Y | "Gmelins Handbuch der anorganischen Chemie", 8. Auflage, Calcium Teil B - Lieferung 2, 1957, Verlag Chemie GmbH, Weinheim, DE * Seite 302 * ---- | 1 | |
| A | IDEM --- | 2-5,10 | |
| A | US-A-1 333 524 (WILSON) --- | | |
| A | CHEMICAL ABSTRACTS, Band 109, Nr. 22, November 1988, Seite 163, Zusammenfassung Nr. 193072a, Columbus, Ohio, US; A.I. SAVOSKINA et al.: "Synthesis of reagent-grade calcium hydroxide from calcium chloride", & ZH. VSES. KHIM. O-VA. IM. D.I. MENDELEEVA 1988, 33(3), 357-8 * Zusammenfassung * --- | 1,2,4,6 | |
| D,A | DE-C- 893 752 (DRÄGERWERK) ------ | | RECHERCHIERTE SACHGEBIETE (Int. Cl.5) B 01 J C 01 F |

Der vorliegende Recherchenbericht wurde für alle Patentansprüche erstellt

| Recherchenort | Abschlußdatum der Recherche | Prüfer |
|---|---|---|
| DEN HAAG | 09-05-1990 | WENDLING J.P. |